(19) Europäisches Patentamt
European Patent Office
Office européen des brevets

(11) **EP 3 432 230 A1**

(12) **EUROPEAN PATENT APPLICATION**
published in accordance with Art. 153(4) EPC

(43) Date of publication:
**23.01.2019 Bulletin 2019/04**

(51) Int Cl.:
**G06N 99/00** (2019.01)

(21) Application number: **17785925.3**

(22) Date of filing: **14.04.2017**

(86) International application number:
**PCT/JP2017/015337**

(87) International publication number:
**WO 2017/183587 (26.10.2017 Gazette 2017/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **18.04.2016 JP 2016083141**

(71) Applicant: **Nippon Telegraph And Telephone
Corporation
Chiyoda-ku, Tokyo 100-8116 (JP)**

(72) Inventors:
• **IDA, Yasutoshi**
  **Musashino-shi**
  **Tokyo 180-8585 (JP)**
• **FUJIWARA, Yasuhiro**
  **Musashino-shi**
  **Tokyo 180-8585 (JP)**

(74) Representative: **Hoffmann Eitle
Patent- und Rechtsanwälte PartmbB
Arabellastraße 30
81925 München (DE)**

(54) **LEARNING DEVICE, LEARNING METHOD, AND LEARNING PROGRAM**

(57) A learning apparatus (10) performs learning using a stochastic gradient descent method in machine learning, and the learning apparatus (10) includes: a gradient calculation unit (11) that calculates a first-order gradient in the stochastic gradient descent method; a statistic calculation unit (12) that calculates a statistic of the first-order gradient; an initialization bias removing unit (13) that removes an initialization bias used as a weight when the statistic calculation unit (12) calculates the statistic of the first-order gradient from the statistic of the first-order gradient calculated by the statistic calculation unit (12); a learning rate adjustment unit (14) that adjusts a learning rate by dividing the learning rate by standard deviation of the first-order gradient based on the statistic of the first-order gradient; and a parameter updating unit (15) that updates a parameter of a learning model using the learning rate adjusted by the learning rate adjustment unit (14).

FIG.1

LEARNING APPARATUS (10)

GRADIENT CALCULATION UNIT (11) → STATISTIC CALCULATION UNIT (12) → INITIALIZATION BIAS REMOVING UNIT (13) → LEARNING RATE ADJUSTMENT UNIT (14) → PARAMETER UPDATING UNIT (15)

EP 3 432 230 A1

**Description**

[Technical Field]

The present invention relates to a learning apparatus, a learning method, and a learning program.

[Background Art]

Machine learning is applied to a field of performing parameter learning of a model so as to lower an error function based on observation data for a problem to be solved such as discrimination, regression, and clustering and performing prediction onto unknown data. In machine learning, models are created from past observation data to predict future data. In this machine learning, models need to be created with less deviation (error) between predicted data and measured data. Furthermore, machine learning is expected to create models with small errors and in a short time.

Among the existing algorithms applied to the learning of parameters of a model, a stochastic gradient descent method is established as one of general-purpose learning algorithms. The stochastic gradient descent method is a method of iteratively performing operation of randomly selecting learning data to calculate an error function and correcting a parameter in a gradient direction of decreasing the error function. Recently, various learning algorithms based on the stochastic gradient descent method have been proposed to implement efficient learning. Note that efficient means that the error function can be lowered by the less number of times of parameter updates than in the conventional stochastic gradient descent method.

For example, there is proposed an algorithm referred to as AdaGrad to implement efficient learning by automatically adjusting the learning rate based on the stochastic gradient descent method (refer to Non Patent Document 1, for example). Note that the learning rate is a hyperparameter for controlling an update amount of a parameter at the time of model learning. The setting of this learning rate determines how quickly the error function can be minimized.

In addition, the algorithm referred to as RMSProp is an algorithm that applies automatic adjustment of the learning rate also to learning complex models such as deep learning. In addition, there are proposed algorithms including one referred to as AdaDelta (for example, refer to Non Patent Document 2) having convergence faster than AdaGrad and capable of easily obtaining local optimal solution, and an efficient learning algorithm referred to as Adam (for example, refer to Non Patent Document 3). Among them, experiments have indicated that Adam has the highest efficiency among the algorithms that automatically adjust learning rates.

The above-described AdaGrad, RMSProp, AdaDelta, and Adam automatically adjust the learning rate by dividing a learning rate by a moving average of an absolute value of past first-order gradient. Note that the first-order gradient refers to differentiation associated with parameters in an error function.

[Citation List]

[Non Patent Citation]

Non Patent Document 1: J. Duchi, E. Hazan, and Y. Singer, "Adaptive Subgradient Methods for Online Learning and Stochastic Optimization," The Journal of Machine Learning Research, 12, 2121-2159, 2011
Non Patent Document 2: M. D. Zeiler, "ADADELTA: AN ADAPTIVE LEARNING RATE METHOD," arXiv preprint arXiv: 1212.5701, 2012
Non Patent Document 3: D. Kingma, and J. Ba, "ADAM: A METHOD FOR STOCHASTIC OPTIMIZATION," arXiv preprint arXiv:1412.6980, 2014

[Summary of Invention]

[Technical Problem]

This first-order gradient is information that defines a direction of parameter update. Therefore, it can be speculated that information indicating the direction of the first-order gradient is important in adjusting the learning rate. However, since AdaGrad, RMSProp, AdaDelta, and Adam use an absolute value of the first-order gradient, information related to the direction of the first-order gradient is lost in the learning rate, and efficient learning is estimated to have limitations.

The present invention has been made in view of the above, and aims to provide a learning apparatus, a learning method, and a learning program capable of achieving efficient learning.

[Solution to Problem]

To solve the above problem and attain the object, a learning apparatus according to the present invention is a learning apparatus that performs learning using a stochastic gradient descent method in machine learning, and includes: a gradient calculation unit that calculates a first-order gradient in the stochastic gradient descent method; a statistic calculation unit that calculates a statistic of the first-order gradient; an initialization bias removing unit that removes an initialization bias when the statistic calculation unit calculates the statistic of the first-order gradient from the statistic of the first-order gradient calculated by the statistic calculation unit; a learning rate adjustment unit that adjusts a learning rate by dividing the learning rate by standard deviation of the first-order gradient based on the statistic of the first-order gradient; and a parameter updating unit that updates a parameter of a learning model using the learning rate adjusted by the learning rate adjustment unit.

[Advantageous Effects of Invention]

According to the present invention, it is possible to achieve efficient learning.

[Brief Description of Drawings]

FIG. 1 is a block diagram illustrating an exemplary configuration of a learning apparatus according to the present embodiment.
FIG. 2 is a flowchart illustrating a processing procedure of learning processing executed by the learning apparatus illustrated in FIG. 1.
FIG. 3 is a diagram illustrating a learning algorithm used by the learning apparatus illustrated in FIG. 1.
FIG. 4 is a flowchart illustrating a processing procedure of learning processing according to a modification of an embodiment.
FIG. 5 is a diagram illustrating a learning algorithm according to a modification of an embodiment.
FIG. 6 is a diagram illustrating an example of a computer that implements a learning apparatus by execution of a program.

[Embodiments for Carrying Out the Invention]

Hereinafter, an embodiment of the present invention will be described in detail with reference to the drawings. Note that the present invention is not limited by the present embodiment. Furthermore, same portions are denoted by same reference numerals in the description of the drawings.

[Definition of main symbols]

Main symbols used in the embodiments are illustrated in a table below. Hereinafter, the same symbols are used in a mathematical background of the conventional technology, a mathematical background of the embodiments, and individual descriptions of the embodiments.

| Symbol | Definition |
|---|---|
| $f(\cdot)$ | Error function, cost function, objective function |
| $\theta$ | Model parameter |
| $f(\theta)$ | Error function when model parameter is given |
| $\theta_{i,t}$ | i-th parameter in t-th repetition |
| $\alpha$ | Learning rate |
| $x_t$ | Input data in t-th repetition |
| $\nabla f(\theta_{i,t-1}; x_{t-1})$ | First-order gradient of i-th parameter in (t-1)th repetition |
| $g_{i,t}$ | Same as $\nabla f(\theta_{i,t-1}; x_{t-1})$. Symbol for simplification. |
| $m_{i,t}$ | Approximate value of moving average of i-th first-order gradient in t-th repetition. |

(continued)

| Symbol | Definition |
|---|---|
| $\hat{m}_{i,t}$ | Value obtained by removing initialization bias from $m_{i,t}$. |
| $\beta_1$ | Weight in calculating approximation of moving average of first-order gradient. |
| $c_{i,t}$ | Moving average of variance of i-th first-order gradient in t-th repetition. |
| $\hat{c}_{i,t}$ | Value obtained by removing initialization bias from $c_{i,t}$. |
| $\beta_2$ | Weight in calculating moving average of variance of first-order gradient. |
| $\varepsilon$ | Small value to stabilize calculation. For example, $10^{-8}$ |

[Mathematical background of conventional technology]

First, the background knowledge to be the basis of the following description will be explained. Machine learning is basically a technique of learning a model from observation data so as to minimize an error function of a problem to be solved and performing prediction onto unknown data using the learned model. Examples of the problems to be solved include data classification, regression, and clustering. Examples of the error function include a square error and cross entropy. Examples of models include logistic regression and neural network.

Here, when an error function is $f(\cdot)$ and a parameter of a learning model is $\theta$, learning is a problem of finding $\theta$ that minimizes $f(\theta)$. The stochastic gradient descent method is a widely used algorithm among various types of algorithms for learning. In the stochastic gradient descent method, learning is performed by repeatedly applying the following Formula (1).

$$\theta_{i,t} = \theta_{i,t-1} - \alpha \nabla f\left(\theta_{i,t-1}; x_{t-1}\right) \qquad (1)$$

$\alpha$ is one of hyperparameters manually set in order to define an update range of the parameter and is referred to as a learning rate. Since the learning rate defines the update range, it greatly affects efficiency of learning. With appropriate setting of the learning rate, it is possible to continue learning with high efficiency. In recent years, researches to achieve high efficiency with automatic adjustment of the learning rate based on various types of information are ongoing. Note that high efficiency means that the error function can be lowered by the less number of times of parameter updates than in the conventional stochastic gradient descent method.

For example, the learning algorithm referred to as Adam automatically adjusts the learning rate by dividing the learning rate by the moving average of the absolute value of the past first-order gradient. First-order gradient refers to differentiation with respect to parameters in the error function and includes information that defines the direction of parameter update. However, since Adam uses an absolute value of the first-order gradient for the learning rate, information on the direction of the first-order gradient is lost, and efficient learning is also expected to be limited.

[Mathematical background of embodiment]

The present embodiment automatically adjusts the learning rate based on information indicating the direction of the gradient in the stochastic gradient descent method. The present embodiment repeats application of the following series of Formulas (2) to (7) instead of Formula (1), thereby implementing adjustment of the learning rate based on the information indicating the direction of the gradient. In the present embodiment, a repetitive calculation count is denoted by t.

First, in the present embodiment, each of variables used in Formulas (2) to (7) described below is initialized, hyperparameters $\alpha$, $\beta_1$, and $\beta_2$ are set to empirically obtained standard values. $\beta_1$ and $\beta_2$ are weights in calculating the statistics of the first-order gradient in the stochastic gradient descent method. $\beta_1$ is a weight in calculating an approximation of a moving average of the first-order gradient and $\beta_2$ is a weight in calculating a moving average of a variance of the first-order gradient. Subsequently, the present embodiment executes calculation using the following Formula (2). Formula (2) indicates that the first-order gradient of the i-th parameter in the (t-1)th repetition is denoted by a symbol $g_{i,t}$.

$$g_{i,t} = \nabla f\left(\theta_{i,t-1}; x_{t-1}\right) \qquad (2)$$

where $\nabla f(\theta_{i,t-1};x_{t-1})$ is a first - order gradient of an i - th parameter in (t-1)th repetition.

In addition, in the present embodiment, an approximate value of the moving average of the i-th first-order gradient $g_{i,t}$ in the t-th repetition is obtained using the following Formula (3).

$$m_{i,t} = \beta_1 m_{i,t-1} + (1 - \beta_1)(g_{i,t} - m_{i,t-1}) \qquad (3)$$

*where $m_{i,t}$ is an approximate value of moving average of i - th first - order gradient in t - th repetition, and*
$\beta_1$ *is a weight in calculating an approximation of a moving average of the first - order gradient.*

The approximate value $m_{i,t}$ of the moving average of the first-order gradient $g_{i,t}$ in Formula (3) is an approximation of the moving average of the first-order gradient over the past time. The approximate value $m_{i,t}$ of the moving average of the first-order gradient is a statistic related to the first-order gradient $g_{i,t}$.

Subsequently, the present embodiment uses the following Formula (4) onto the approximate value $m_{i,t}$ of the moving average of the first-order gradient $g_{i,t}$ to remove an initialization bias. In other words, the present embodiment uses Formula (4) to remove the initialization bias from the approximate value $m_{i,t}$ of the moving average of the first-order gradient $g_{i,t}$.

$$\hat{m}_{i,t} = \frac{m_{i,t}}{1 - \beta_1^{\ t}} \qquad (4)$$

$\hat{m}_{i,t}$ is a value obtained by removing an initialization bias from $m_{i,t}$.

In addition, the present embodiment uses the following Formula (5) to obtain a moving average of the variance of the i-th first-order gradient $g_{i,t}$ in the t-th repetition.

$$c_{i,t} = \beta_2 c_{i,t-1} + \beta_2(1 - \beta_2)(g_{i,t} - m_{i,t-1})^2 \qquad (5)$$

*where $c_{i,t}$ is a moving average of the variance of the i - th first - order gradient in the t - th repetition, and*
$\beta_2$ *is a weight in calculating a moving average of variance of the first - order gradient.*

A moving average $c_{i,t}$ of the variance of the i-th first-order gradient $g_{i,t}$ in Formula (5) is a moving average of the variance of the first-order gradient over the past time. The moving average $c_{i,t}$ of the variance of this first-order gradient $g_{i,t}$ is a statistic of the first-order gradient $g_{i,t}$. The moving average $c_{i,t}$ of the variance of the first-order gradient $g_{i,t}$ is a value determined by the dispersion in the past direction of the first-order gradient $g_{i,t}$, and includes information indicating the direction of the first-order gradient $g_{i,t}$.

Subsequently, the present embodiment uses the following Formula (6) onto the moving average $c_{i,t}$ of the variance of the first-order gradient $g_{i,t}$ to remove an initialization bias. In other words, the present embodiment uses Formula (6) to remove the initialization bias from the moving average $c_{i,t}$ of the variance of the first-order gradient $g_{i,t}$.

$$\hat{c}_{i,t} = \frac{c_{i,t}}{1 - \beta_2^{\ t}} \qquad (6)$$

$\hat{c}_{i,t}$ is a value obtained by removing an initialization bias from $c_{i,t}$.

In addition, the present embodiment uses the following Formula (7) to adjust the learning rate.

$$\theta_{i,t} = \theta_{i,t-1} - \frac{\alpha \hat{m}_{i,t}}{\sqrt{\hat{c}_{i,t}} + \epsilon} \qquad (7)$$

where $\epsilon$ is a small value to stabilize calculation, for example, $10^{-8}$.

The present embodiment repeats the calculation of Formulas (2) to (7) until a parameter $\theta_t$ of the learning model converges. As illustrated in Formula (7), the present embodiment uses formulation of automatically adjusting the learning rate by dividing the learning rate by a square root of the moving average $c_{i,t}$ of the variance of the first-order gradient $g_{i,t}$ after bias removal, that is, dividing by standard deviation of the first-order gradient. Here, the variance is determined by the dispersion of the first-order gradient in the past direction.

Therefore, the present embodiment enables execution of adjustment of the learning rate based on the information of the direction of the first-order gradient, making it possible to lower the error function. That is, according to the present embodiment, it is possible to achieve efficient learning.

[Embodiments]

A learning apparatus or the like according to the present embodiment will be described based on the mathematical background of the embodiment described above. Note that the following embodiments are given as an example.

[Configuration of learning apparatus]

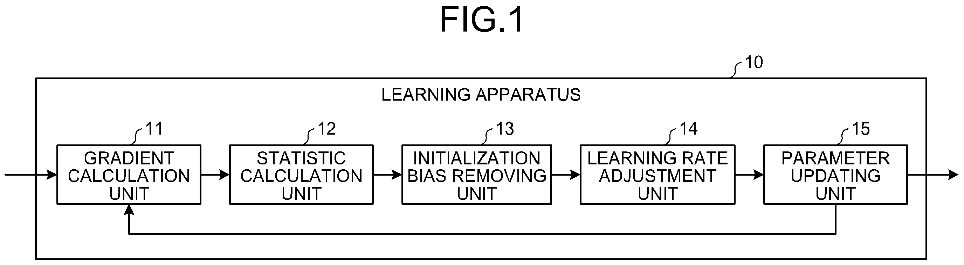

FIG. 1 is a block diagram illustrating an exemplary configuration of a learning apparatus 10 according to the present embodiment. The learning apparatus 10 performs learning using a stochastic gradient descent method in machine learning. The learning apparatus 10 takes standard values of hyperparameters $\alpha$, $\beta_1$, and $\beta_2$ as inputs. Inputs of $\alpha$, $\beta_1$, and $\beta_2$ are performed merely at the first time. In addition, the learning apparatus 10 outputs the converged parameter $\theta_t$, for example. As illustrated in FIG. 1, the learning apparatus 10 according to the present embodiment includes a gradient calculation unit 11, a statistic calculation unit 12, an initialization bias removing unit 13, a learning rate adjustment unit 14, and a parameter updating unit 15.

The gradient calculation unit 11 calculates a first-order gradient in the stochastic gradient descent method. Specifically, the gradient calculation unit 11 takes $\theta_t$ updated by the parameter updating unit 15 as input. Furthermore, the gradient calculation unit 11 takes input data $x_t$ from the external apparatus as input. The gradient calculation unit 11 calculates a first-order gradient $g_t$ for t representing the repetitive calculation count and outputs a calculation result to the statistic calculation unit 12.

First, the gradient calculation unit 11 initializes each of the variables. In this case, the gradient calculation unit 11 sets t = 0 for the repetitive calculation count t. Then, the gradient calculation unit 11 sets $m_t = m_0$ for the approximate value $m_t$ of the moving average of the first-order gradient $g_t$, and sets $c_t = c_C$ for the moving average $c_t$ of the variance of the first-order gradient $g_t$. In a similar manner, the initial value is also set for $m_t$ after removal of an initialization bias and $c_t$ after removal of the initialization bias. This initialization is performed merely at the first time.

Then, the gradient calculation unit 11 takes inputs of the input data $x_t$ and the parameter $\theta_t$. Subsequently, the gradient calculation unit 11 increments t by +1. Due to this +1 increment, the approximate value $m_t$ of the moving average of the first-order gradient and the moving average $c_t$ of the variance of the first-order gradient from each of which the initialization bias described below has been removed are going to be an approximate value $m_{t-1}$ of the moving average of the first-order gradient and a moving average $c_{t-1}$ of the variance of the first-order gradient. Accordingly, in a case where initialization is performed for each of variables, t = 1 is established due to this +1 increment, and then, the approximate value $m_{t-1}$ of the moving average of the first-order gradient and the moving average $c_{t-1}$ of the variance of the first-order gradient from each of which the initialization bias has been removed are going to be the approximate value $m_{t-1}$ of the moving average of the first-order gradient and the moving average $c_{t-1}$ of the variance of the first-order gradient from each of which the initialization bias has been removed.

Then, the gradient calculation unit 11 uses Formula (2) to calculate the first-order gradient $g_t$ and outputs the result to the statistic calculation unit 12.

The statistic calculation unit 12 calculates the statistics of the first-order gradient. Specifically, the statistic calculation unit 12 takes the first-order gradient $g_t$ output from the gradient calculation unit 11 and the standard values of hyperparameters $\alpha$, $\beta_1$, and $\beta_2$ as inputs and calculates the approximate value $m_t$ of the moving average of the first-order gradient $g_t$ and the moving average $c_t$ of variance of the first-order gradient $g_t$ as statistics. The statistic calculation unit 12 uses Formula (3) to calculate the approximate value $m_t$ of the moving average of the first-order gradient $g_t$. Then, the statistic calculation unit 12 uses Formula (5) to calculate the moving average $c_t$ of the variance of the first-order gradient $g_t$. The statistic calculation unit 12 outputs the approximate value $m_t$ of the moving average of the first-order

gradient $g_t$ and the moving average $c_t$ of the variance of the first-order gradient $g_t$ to the initialization bias removing unit 13.

The initialization bias removing unit 13 removes the initialization bias from the statistic of the first-order gradient calculated by the statistic calculation unit 12. Specifically, the initialization bias removing unit 13 uses Formula (4) onto the approximate value $m_t$ of the moving average of the first-order gradient $g_t$ to remove the initialization bias. Then, the initialization bias removing unit 13 uses Formula (6) onto the moving average $c_t$ of the variance of the first-order gradient $g_t$ to remove the initialization bias. Note that the calculation described in Non Patent Document 3 may be used for calculation to remove the initialization bias, for example.

The learning rate adjustment unit 14 adjusts the learning rate by dividing the learning rate by the standard deviation of the first-order gradient based on the statistic of the first-order gradient. Specifically, the learning rate adjustment unit 14 uses Formula (7) to adjust the learning rate based on the approximate value $m_t$ of the moving average of the first-order gradient $g_t$ and the moving average $c_t$ of the variance of the first-order gradient $g_t$ from each of which the initialization bias has been removed by the initialization bias removing unit 13. Specifically, the learning rate adjustment unit 14 adjusts the learning rate by dividing the learning rate by the standard deviation of the first-order gradient based on the statistic from which the initialization bias has been removed.

The parameter updating unit 15 updates the parameters of the learning model using the learning rate adjusted by the learning rate adjustment unit 14. Specifically, the parameter updating unit 15 updates the model parameter $\theta_t$ based on the calculation result of the learning rate adjustment unit 14. In a case where the parameter $\theta_t$ converges, the parameter updating unit 15 finishes the calculation processing. In contrast, in a case where the parameter $\theta_t$ does not converge, the parameter $\theta_t$ is output to the gradient calculation unit 11. This causes the gradient calculation unit 11 to increment t by +1. Then, the gradient calculation unit 11, the statistic calculation unit 12, the initialization bias removing unit 13, and the learning rate adjustment unit 14 repeat calculation of Formulas (2) to (7).

[Learning processing]

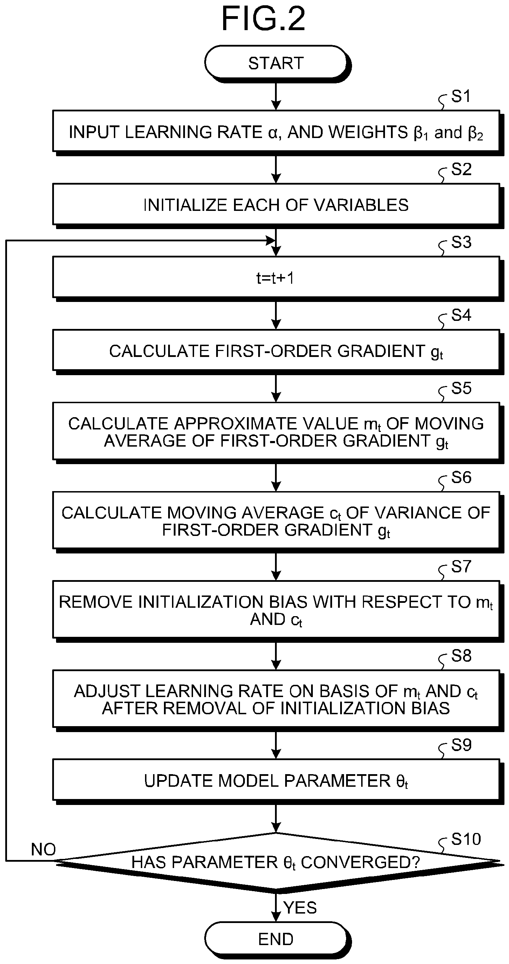

Next, learning processing executed by the learning apparatus 10 will be described. FIG. 2 is a flowchart illustrating a processing procedure of learning processing executed by the learning apparatus 10 illustrated in FIG. 1. First, the gradient calculation unit 11 in the learning apparatus 10 receives inputs of standard values of hyperparameters $\alpha$, $\beta_1$, and $\beta_2$ (Step S1). Subsequently, the gradient calculation unit 11 initializes each of variables (Step S2).

Then, the gradient calculation unit 11 takes inputs of input data $x_t$ and the parameter $\theta_t$ and increments t by +1 (Step S3). Subsequently, the gradient calculation unit 11 uses Formula (2) to calculate the first-order gradient $g_t$ (Step S4) and outputs the result to the statistic calculation unit 12.

Then, the statistic calculation unit 12 takes the first-order gradient $g_t$ output from the gradient calculation unit 11 and the standard values of hyperparameters $\alpha$, $\beta_1$, and $\beta_2$ as inputs, and uses Formula (3) to calculate the approximate value $m_t$ of the moving average of the first-order gradient $g_t$ (Step S5). In addition, the statistic calculation unit 12 uses Formula (5) to calculate the moving average $c_t$ of the variance of the first-order gradient $g_t$ (Step S6).

Then, the initialization bias removing unit 13 removes the initialization bias with respect to the approximate value $m_t$ of the moving average of the first-order gradient $g_t$ and the moving average $c_t$ of the variance of the first-order gradient $g_t$ calculated by the statistic calculation unit 12 (Step S7). The initialization bias removing unit 13 uses Formula (4) onto the approximate value $m_t$ of the moving average of the first-order gradient $g_t$ to remove the initialization bias. Then, the initialization bias removing unit 13 uses Formula (6) onto the moving average $c_t$ of the variance of the first-order gradient $g_t$ to remove the initialization bias.

Subsequently, the learning rate adjustment unit 14 adjusts the learning rate (Step S8) using a second term of Formula (7) based on the approximate value $m_t$ of the moving average of the first-order gradient $g_t$ and the moving average $c_t$ of the variance of the first-order gradient $g_t$, from each of which the initialization bias has been removed by the initialization bias removing unit 13. In Formula (7), the learning rate is adjusted by calculating a product of the learning rate and the value obtained by dividing the approximate value of the moving average of the first-order gradient by the standard deviation of the first-order gradient that is a square root of the moving average of the variance of the first-order gradient.

Then, the parameter updating unit 15 updates the parameter $\theta_t$ of the model based on the calculation result of Step S8 (Step S9). Thereafter, the parameter updating unit 15 determines whether the parameter $\theta_t$ of the model has converged (Step S10). In a case where the parameter updating unit 15 determines that the parameter $\theta_t$ has converged (Step S10: Yes), the learning apparatus 10 finishes the processing. In contrast, in a case where the parameter updating unit 15 determines that the parameter $\theta_t$ has not converged (Step S10: No), the learning apparatus 10 returns to Step S3. That is, the gradient calculation unit 11 increments t by +1 and executes the processing from Step S4 onward again.

The above-described learning processing adjusts the learning rate by dividing the learning rate by the standard deviation of the first-order gradient. In other words, the above-described learning processing adjusts the learning rate using the standard deviation of the first-order gradient including information defining the direction of parameter update. Therefore, according to the learning processing described above, it is possible to achieve efficient learning.

[Learning algorithm]

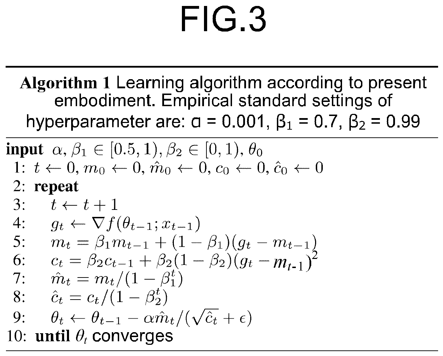

Next, a learning algorithm used by the learning apparatus 10 will be described. FIG. 3 is a diagram illustrating a learning algorithm used by the learning apparatus 10 illustrated in FIG. 1. The learning algorithm illustrated in FIG. 3 corresponds to the processing indicated by the flowchart of the learning processing in FIG. 2. As illustrated in FIG. 3, the learning algorithm firstly illustrates an empirical standard setting of hyperparameters. For example, learning rates $\alpha$ = 0.001, $\beta_1$ = 0.7, $\beta_2$ = 0.99 are illustrated as empirical standard settings.

First, the learning algorithm inputs $\alpha$, $\beta_1$, $\beta_2$, and $\theta_0$. This corresponds to Step S1 illustrated in FIG. 2. Subsequently, the learning algorithm initializes each of variables. More specifically, the repetitive calculation count is set as t = 0, the approximate value $m_t$ of the moving average of the first-order gradient is set as $m_t = m_0$, the moving average $c_t$ of the variance of the first-order gradient is set as $c_t = c_0$, and the $m_t$ after initialization bias removal and $c_t$ after initialization bias removal are set to their initial values (first line in FIG. 3). The first line of FIG. 3 corresponds to Step S2 illustrated in FIG. 2.

The learning algorithm increments t by +1 (third line in FIG. 3). The third line of FIG. 3 corresponds to Step S3 illustrated in FIG. 2. The learning algorithm calculates the first-order gradient $g_t$ using Formula (2) (fourth line in FIG. 3). The fourth line of FIG. 3 corresponds to Step S4 illustrated in FIG. 2.

The learning algorithm uses Formula (3) to calculate the approximate value $m_t$ of the moving average of the first-order gradient $g_t$ (fifth line in FIG. 3). The fifth line of FIG. 3 corresponds to Step S5 illustrated in FIG. 2. Then, the learning algorithm uses Formula (5) to calculate the moving average $c_t$ of the variance of the first-order gradient $g_t$ (sixth line of FIG. 3). The sixth line of FIG. 3 corresponds to Step S6 illustrated in FIG. 2.

Then, the learning algorithm uses Formula (4) onto the approximate value $m_t$ of the moving average of the first-order gradient $g_t$ to remove the initialization bias (seventh line in FIG. 3). The learning algorithm uses Formula (6) onto the moving average $c_t$ of the variance of the first-order gradient $g_t$ to remove the initialization bias (eighth line in FIG. 3). The seventh line and the eighth line in FIG. 3 correspond to Step S7 illustrated in FIG. 2.

The learning algorithm uses Formula (7) to adjust the learning rate based on the approximate value $m_t$ of the moving average of the first-order gradient $g_t$ and the moving average $c_t$ of the variance of the first-order gradient $g_t$ from each of which the initialization bias has been removed, and updates the parameter $\theta_t$ (ninth line in FIG. 3). The ninth line of FIG. 3 corresponds to Steps S8 and S9 illustrated in FIG. 2.

The learning algorithm repeats the processing from the second line to the seventh line in FIG. 3 (tenth line in FIG. 3) until the parameter $\theta_t$ converges. The tenth line of FIG. 3 corresponds to Step S10 illustrated in FIG. 2.

[Effects of embodiment]

In the present embodiment, the learning rate is adjusted by dividing the learning rate by the standard deviation of the first-order gradient instead of by the absolute value of the first-order gradient in the stochastic gradient descent method, making it possible to execute more efficient learning than in conventional methods.

Specifically, it was experimentally found that, in the present embodiment, the learning rate is adjusted by dividing the learning rate by the standard deviation of the first-order gradient, making it possible to achieve a greater error decrease in a case where the repetitive calculation count t is incremented by one, compared with conventional Adam (refer to Non Patent Document 3, for example). That is, according to the present embodiment, the parameter $\theta_t$ can be converged by the learning with less repetitive calculation count t than the conventional Adam. Therefore, according to the present embodiment, it is possible to achieve more efficient learning as compared with the conventional Adam.

Furthermore, in the present embodiment, the standard deviation of the first-order gradient including the information defining the direction of updating the parameter is used to adjust the learning rate, making it possible to obtain a smaller error function of the learned model than by Adam, leading to acquisition of experimental results with high accuracy.

In addition, the present embodiment does not need a learning rate attenuation schedule necessary in conventional learning (e.g., AdaGrad (refer to Non Patent Document 1, for example), it is also unnecessary to perform manual tuning on the learning rate attenuation schedule, enabling the reduction in the tuning cost.

Here, some conventional algorithms need to perform manual tuning for a gradient clipping threshold in order to avoid a failure in learning due to extremely large update of parameters in a case where the gradient becomes extremely large. That is, in a conventional case where the gradient becomes extremely large and exceeds the threshold, calculation is performed using a threshold instead of an actual gradient value to reduce learning failures. Conventionally, it was necessary to manually tune this threshold.

In contrast, the present embodiment divides the learning rate by the standard deviation of the first-order gradient in Formula (7) that is an arithmetic expression to obtain the parameter $\theta_t$. Here, when the gradient becomes extremely large, the variance of the gradient also increases accordingly. Therefore, in the embodiment, even when the gradient included in the numerator of Formula (7) becomes extremely large, the variance of the gradient included in the denominator also increases, and thus, the parameter $\theta_t$ would not become extremely large. In this manner, in the present embodiment, since the update amount of the parameter $\theta_t$ does not become extremely large, it can be said that the likelihood of occurrence of a learning failure is low. For this reason, in the present embodiment, since the calculation proceeds without providing a gradient clipping threshold, manual tuning itself with respect to the gradient clipping threshold becomes unnecessary, leading to the reduction of the tuning cost.

[Modification]

A modification according to the present embodiment will be described. Also in the modification, the learning rate is automatically adjusted based on information indicating the direction of the gradient in the stochastic gradient descent method. The present modification repeats application of the following series of Formulas (8) to (12) instead of Formulas (2) to (7), thereby implementing adjustment of the learning rate based on the information indicating the direction of the gradient. Also in this modification, the repetitive calculation count is denoted by t.

First, in this modification, each of variables used in Formulas (8) to (12) described below is initialized, and hyperparameters $\alpha$ and $\beta_1$ are set to empirically obtained standard values. $\beta_1$ is a weight in calculating the statistic of the first-order gradient in the stochastic gradient descent method. $\beta_1$ is a weight in calculating the moving average of the first-order gradient and the moving average of the variance of the first-order gradient. Subsequently, in this modification, the calculation is executed using the following Formula (8). Formula (8) indicates that the first-order gradient of the i-th parameter in the (t-1)th repetition is denoted by a symbol $g_{i,t}$.

$$g_{i,t} \;=\; \nabla f\big(\theta_{i,t-1}\,;\, x_{t-1}\big) \tag{8}$$

$\nabla f(\theta_{i,t-1}; x_{t-1})$ is a first-order gradient of an i-th parameter in (t-1)th repetition.

In this modification, a moving average of the i-th first-order gradient $g_{i,t}$ in the t-th repetition is obtained using the following Formula (9).

$$m_{i,t} \;=\; \beta_1 m_{i,t-1} \;+\; \big(1 - \beta_1\big) g_{i,t} \tag{9}$$

*where $m_{i,t}$ is a moving average of i-th first-order gradient in t-th repetition, and*
*$\beta_1$ is a weight in calculating a moving average of the first-order gradient.*

The moving average $m_{i,t}$ of the first-order gradient $g_{i,t}$ in Formula (9) is a moving average of the first-order gradient over the past time. The moving average $m_{i,t}$ of this first-order gradient is the statistic related to the first-order gradient $g_{i,t}$.

In the present embodiment, a moving average of the variance of the i-th first-order gradient $g_{i,t}$ in the t-th repetition is obtained using the following Formula (10).

$$c_{i,t} \;=\; \beta_1 c_{i,t-1} \;+\; \beta_1\big(1 - \beta_1\big)\big(g_{i,t} - m_{i,t-1}\big)^2 \tag{10}$$

*where $c_{i,t}$ is a moving average of the variance of the i-th first-order gradient in the t-th repetition, and*
*$\beta_1$ is a weight in calculating a moving average of the variance of the first-order gradient.*

The moving average $c_{i,t}$ of the variance of the i-th first-order gradient $g_{i,t}$ in Formula (10) is a moving average of the variance of the first-order gradient over the past time. The moving average $c_{i,t}$ of the variance of this first-order gradient $g_{i,t}$ is a statistic of the first-order gradient $g_{i,t}$. The moving average $c_{i,t}$ of the variance of the first-order gradient $g_{i,t}$ is a value determined by the dispersion in the past direction of the first-order gradient $g_{i,t}$, and includes information indicating the direction of the first-order gradient $g_{i,t}$.

Subsequently, the present modification uses the following Formula (11) onto the moving average $c_{i,t}$ of the variance of the first-order gradient $g_{i,t}$ to remove an initialization bias. In other words, the present modification uses Formula (11) to remove the initialization bias from the moving average $c_{i,t}$ of the variance of the first-order gradient $g_{i,t}$.

$$\hat{c}_{i,t} = \frac{c_{i,t}}{1-\beta_1^{\ t}} \qquad\qquad (11)$$

where $\hat{c}_{i,t}$ is a value obtained by removing an initialization bias from $c_{i,t}$.

In addition, the present embodiment uses the following Formula (12) to adjust the learning rate.

$$\theta_{i,t} = \theta_{i,t-1} - \frac{\alpha g_{i,t}}{\sqrt{\hat{c}_{i,t}} + \epsilon} \qquad\qquad (12)$$

*where $\epsilon$ is a small value to stabilize calculation, for example, $10^{-8}$.*

In the present modification, the calculation of Formulas (8) to (12) is repeated until the parameter $\theta_t$ of the learning model converges. As illustrated in Formula (12), the present modification uses formulation of automatically adjusting the learning rate by dividing the learning rate by a square root of the moving average $c_{i,t}$ of the variance of the first-order gradient $g_{i,t}$ after bias removal, that is, dividing by standard deviation of the first-order gradient. Here, the variance is determined by the dispersion of the first-order gradient in the past direction.

Therefore, also in this modification, adjustment of the learning rate based on the information of the direction of the first-order gradient can be executed, making it possible to lower the error function. The learning apparatus according to the present modification has a configuration similar to that of the learning apparatus 10 illustrated in FIG. 1. Therefore, the learning processing according to the present modification will be described.

[Learning processing]

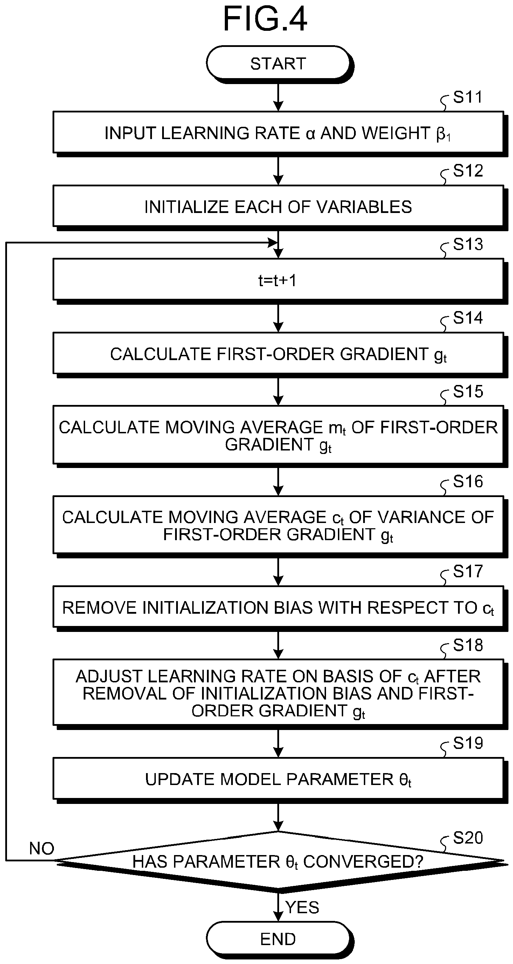

FIG. 4 is a flowchart illustrating a processing procedure of learning processing according to a modification of the embodiment. First, the gradient calculation unit 11 in the learning apparatus 10 receives inputs of standard values of hyperparameters $\alpha$ and $\beta_1$ (Step S11). Steps S12 and S13 illustrated in FIG. 4 respectively correspond to Steps S2 and S3 illustrated in FIG. 1.

Subsequently, the gradient calculation unit 11 uses Formula (8) to calculate the first-order gradient $g_t$ (Step S14) and outputs the result to the statistic calculation unit 12. Then, the statistic calculation unit 12 takes the first-order gradient $g_t$ output from the gradient calculation unit 11 and the standard values of hyperparameters $\alpha$ and $\beta_1$ as inputs, and uses Formula (9) to calculate the moving average $m_t$ of the first-order gradient $g_t$ (Step S15). In addition, the statistic calculation unit 12 uses Formula (10) to calculate the moving average $c_t$ of the variance of the first-order gradient $g_t$ (Step S16).

Then, the initialization bias removing unit 13 removes the initialization bias from the moving average $c_t$ of the variance of the first-order gradient $g_t$ calculated by the statistic calculation unit 12 (Step S17). The initialization bias removing unit 13 uses Formula (11) onto the moving average $c_t$ of the variance of the first-order gradient $g_t$ to remove the initialization bias.

Subsequently, the learning rate adjustment unit 14 adjusts the learning rate using the second term of Formula (12) based on the first-order gradient $g_t$ and the moving average $c_t$ of the variance of the first-order gradient $g_t$ from which the initialization bias has been removed (Step S18). In Formula (12), the learning rate is adjusted by calculating a product of the learning rate and the value obtained by dividing the first-order gradient by the standard deviation of the first-order gradient that is a square root of the moving average of the variance of the first-order gradient.

Steps S19 and S20 illustrated in FIG. 4 respectively correspond to Steps S9 and S10 illustrated in FIG. 2.

[Learning algorithm according to modification]

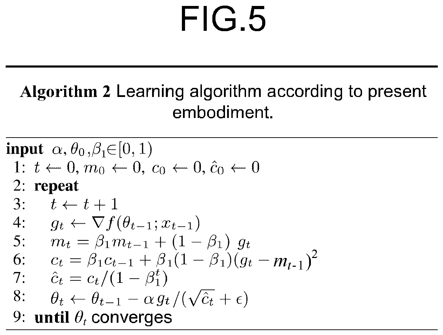

Next, a learning algorithm according to the present modification will be described. FIG. 5 is a diagram illustrating a learning algorithm 2 according to the present modification. The learning algorithm 2 illustrated in FIG. 5 corresponds to the processing indicated by the flowchart of the learning processing in FIG. 4.

As illustrated in FIG. 5, the learning algorithm inputs $\alpha$, $\beta_1$, and $\theta_0$ first. This corresponds to Step S11 illustrated in FIG. 4. Subsequently, the learning algorithm initializes each of variables. More specifically, with the setting of the repetitive calculation count t = 0, the moving average $m_t$ of the first-order gradient as $m_t = m_0$, the moving average $c_t$ of the variance of the first-order gradient as $c_t = c_0$, the $c_t$ after initialization bias removal is set to the initial value (first line in FIG. 5). The first line of FIG. 5 corresponds to Step S12 illustrated in FIG. 4.

The learning algorithm increments t by +1 (third line in FIG. 5). The third line in FIG. 5 corresponds to Step S13 illustrated in FIG. 4. The learning algorithm uses Formula (8) to calculate the first-order gradient $g_t$ (fourth line in FIG.

5). The fourth line in FIG. 5 corresponds to Step S14 illustrated in FIG. 4.

The learning algorithm uses Formula (9) to calculate the moving average $m_t$ of the first-order gradient $g_t$ (fifth line in FIG. 5). The fifth line of FIG. 5 corresponds to Step S15 illustrated in FIG. 4. Then, the learning algorithm uses Formula (10) to calculate the moving average $c_t$ of the variance of the first-order gradient $g_t$ (sixth line of FIG. 5). The sixth line of FIG. 5 corresponds to Step S16 illustrated in FIG. 4. The learning algorithm uses Formula (11) onto the moving average $c_t$ of the variance of the first-order gradient $g_t$ to remove the initialization bias (seventh line in FIG. 5). The seventh line in FIG. 5 corresponds to Step S17 illustrated in FIG. 4.

The learning algorithm uses Formula (12) to adjust the learning rate based on the first-order gradient $g_t$ and the moving average $c_t$ of the variance of the first-order gradient $g_t$, and updates the parameter $\theta_t$ (eighth line in FIG. 5). The eighth line in FIG. 5 corresponds to Steps S18 and S19 illustrated in FIG. 4.

The learning algorithm repeats the processing from the second line to the eighth line in FIG. 5 (ninth line in FIG. 5) until the parameter $\theta_t$ converges. The ninth line in FIG. 5 corresponds to Step S20 illustrated in FIG. 4.

[System configuration of embodiment]

Individual components of the learning apparatus 10 illustrated in FIG. 1 are functionally conceptual and need not necessarily be physically configured as illustrated. That is, the specific form of the dispersion and integration of the functions of the learning apparatus 10 is not limited to those illustrated in the drawings, and whole or a part of the apparatus may be functionally or physically configured in dispersion or integration in arbitrary units in accordance with various loads, usage conditions, or the like.

In addition, all or a certain part of each of processing performed in the learning apparatus 10 may be implemented by a central processing unit (CPU) or a program analyzed and executed by the CPU. In addition, each of the processing performed in the learning apparatus 10 may be implemented as hardware using wired logic.

In addition, among all the processing described in the embodiments, all or a part of the processing described as being automatically performed can also be performed manually. Alternatively, all or a part of the processing described as being performed manually can be automatically performed by a known method. Besides this, information including the processing procedure, control procedure, specific nomenclature, various data, and parameters as described above or in the drawings can be appropriately changed unless otherwise noted.

[Programs]

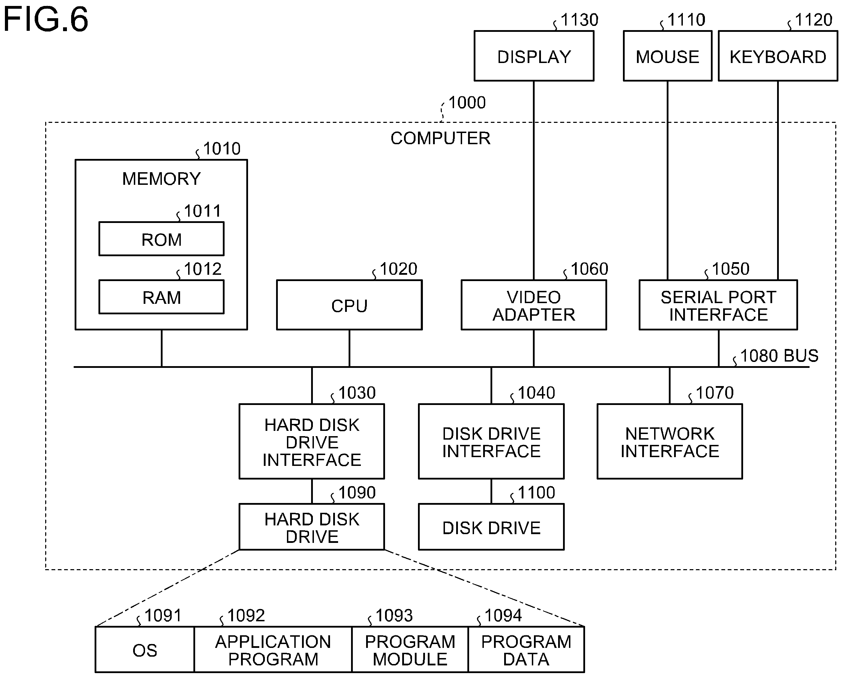

FIG. 6 is a diagram illustrating an example of a computer that implements the learning apparatus 10 by execution of a program. A computer 1000 includes a memory 1010 and a CPU 1020, for example. The computer 1000 also includes a hard disk drive interface 1030, a disk drive interface 1040, a serial port interface 1050, a video adapter 1060, and a network interface 1070. These components are connected by a bus 1080.

The memory 1010 includes a read only memory (ROM) 1011 and a RAM 1012. The ROM 1011 stores, for example, a boot program such as basic input output system (BIOS). The hard disk drive interface 1030 is connected to a hard disk drive 1090. The disk drive interface 1040 is connected to a disk drive 1100. For example, a detachable storage medium such as a magnetic disk or an optical disk is inserted into the disk drive 1100. The serial port interface 1050 is connected to a mouse 1110 and a keyboard 1120, for example. The video adapter 1060 is connected to a display 1130, for example.

The hard disk drive 1090 stores an OS 1091, an application program 1092, a program module 1093, and program data 1094, for example. That is, the program that defines each of processing of the learning apparatus 10 is implemented as a program module 1093 describing codes executable by the computer 1000. The program module 1093 is stored in the hard disk drive 1090, for example. For example, the program module 1093 for executing processing similar to functional configurations of the learning apparatus 10 is stored in the hard disk drive 1090. Note that the hard disk drive 1090 may be replaced by a solid state drive (SSD).

In addition, the setting data used in the processing of the above-described embodiment is stored as program data 1094 in the memory 1010 and the hard disk drive 1090, for example. Then, the CPU 1020 reads the program module 1093 and the program data 1094 stored in the memory 1010 and the hard disk drive 1090 onto the RAM 1012 as necessary for execution.

The program module 1093 and the program data 1094 is not necessary stored in the hard disk drive 1090, but may be stored in a detachable storage medium and read out by the CPU 1020 via the disk drive 1100, for example. Alternatively, the program module 1093 and the program data 1094 may be stored in another computer connected via a network (LAN, WAN, or the like). In addition, the program module 1093 and the program data 1094 may be read out from the other computer by the CPU 1020 via the network interface 1070.

The embodiments of the present invention made by the present inventors have been described above, while the present invention is not limited by description and drawing according to the present embodiment, which form a part of the disclosure of the present invention. That is, other embodiments, examples, operation techniques, or the like that are performed by those skilled in the art based on the present embodiments are all included in the scope of the present invention.

Reference Signs List

10    LEARNING APPARATUS

11    GRADIENT CALCULATION UNIT
12    STATISTIC CALCULATION UNIT
13    INITIALIZATION BIAS REMOVING UNIT
14    LEARNING RATE ADJUSTMENT UNIT
15    PARAMETER UPDATING UNIT


**Claims**

1.  A learning apparatus that performs learning using a stochastic gradient descent method in machine learning, the learning apparatus comprising:

    a gradient calculation unit that calculates a first-order gradient in the stochastic gradient descent method;
    a statistic calculation unit that calculates a statistic of the first-order gradient;
    an initialization bias removing unit that removes an initialization bias when the statistic calculation unit calculates the statistic of the first-order gradient from the statistic of the first-order gradient calculated by the statistic calculation unit;
    a learning rate adjustment unit that adjusts a learning rate by dividing the learning rate by standard deviation of the first-order gradient based on the statistic of the first-order gradient; and
    a parameter updating unit that updates a parameter of a learning model using the learning rate adjusted by the learning rate adjustment unit.

2.  The learning apparatus according to claim 1,
    wherein the statistic calculation unit calculates an approximate value of a moving average of the first-order gradient and a moving average of variance of the first-order gradient as the statistics of the first-order gradient, and
    the learning rate adjustment unit adjusts the learning rate by calculating a product of the learning rate and a value obtained by dividing the approximate value of the moving average of the first-order gradient by the standard deviation of the first-order gradient that is a square root of the moving average of the variance of the first-order gradient.

3.  The learning apparatus according to claim 1,
    wherein the statistic calculation unit calculates a moving average of the first-order gradient and a moving average of variance of the first-order gradient as the statistics of the first-order gradient, and
    the learning rate adjustment unit adjusts the learning rate by calculating a product of the learning rate and a value obtained by dividing the first-order gradient by the standard deviation of the first-order gradient that is a square root of the moving average of the variance of the first-order gradient.

4.  The learning apparatus according to claim 2,
    wherein the initialization bias removing unit
    removes an initialization bias of the approximate value of the moving average of the first-order gradient by dividing the approximate value of the moving average of the first-order gradient by a value obtained by subtracting a weight in calculating the moving average of the first-order gradient from one, and
    removes an initialization bias of the approximate value of the moving average of the variance of the first-order gradient by dividing the moving average of the variance of the first-order gradient by a value obtained by subtracting a weight in calculating the moving average of the variance of the first-order gradient from one.

5.  The learning apparatus according to claim 3, wherein the initialization bias removing unit removes the initialization bias of the approximate value of the moving average of the variance of the first-order gradient by dividing the moving average of the variance of the first-order gradient by a value obtained by subtracting a weight in calculating the moving average of the variance of the first-order gradient from one.

6.  A learning method executed by a learning apparatus that performs learning using a stochastic gradient descent method in machine learning, the learning method comprising:

    calculating a first-order gradient in the stochastic gradient descent method;
    calculating a statistic of the first-order gradient;
    removing an initialization bias when calculating the statistic of the first-order gradient in calculation of the statistic from the statistic of the first-order gradient;
    adjusting a learning rate by dividing the learning rate by standard deviation of the first-order gradient based on the statistic of the first-order gradient; and
    updating a parameter of a learning model using the learning rate adjusted in the adjustment.

7.  A learning program that causes a computer to execute:

    a step of calculating a first-order gradient in a stochastic gradient descent method in a case where learning is executed using the stochastic gradient descent method in machine learning;
    a step of calculating a statistic of the first-order gradient;
    a step of removing an initialization bias used in calculating the statistic of the first-order gradient in the step of calculating the statistic from the statistic of the first-order gradient;
    a step of adjusting a learning rate by dividing the learning rate by standard deviation of the first-order gradient based on the statistic of the first-order gradient; and
    a step of updating a parameter of a learning model using the learning rate adjusted in the step of adjustment.

# FIG.1

LEARNING APPARATUS

10

11 GRADIENT CALCULATION UNIT → 12 STATISTIC CALCULATION UNIT → 13 INITIALIZATION BIAS REMOVING UNIT → 14 LEARNING RATE ADJUSTMENT UNIT → 15 PARAMETER UPDATING UNIT

# FIG.2

```
                          ( START )
                              │
                              ▼                    ⌐S1
         ┌──────────────────────────────────────────┐
         │ INPUT LEARNING RATE α, AND WEIGHTS β₁ and β₂ │
         └──────────────────────────────────────────┘
                              │
                              ▼                    ⌐S2
         ┌──────────────────────────────────────────┐
         │          INITIALIZE EACH OF VARIABLES      │
         └──────────────────────────────────────────┘
                              │
                              ▼                    ⌐S3
         ┌──────────────────────────────────────────┐
         │                   t=t+1                    │
         └──────────────────────────────────────────┘
                              │
                              ▼                    ⌐S4
         ┌──────────────────────────────────────────┐
         │     CALCULATE FIRST-ORDER GRADIENT gₜ      │
         └──────────────────────────────────────────┘
                              │
                              ▼                    ⌐S5
         ┌──────────────────────────────────────────┐
         │  CALCULATE APPROXIMATE VALUE mₜ OF MOVING  │
         │     AVERAGE OF FIRST-ORDER GRADIENT gₜ     │
         └──────────────────────────────────────────┘
                              │
                              ▼                    ⌐S6
         ┌──────────────────────────────────────────┐
         │   CALCULATE MOVING AVERAGE cₜ OF VARIANCE OF │
         │         FIRST-ORDER GRADIENT gₜ           │
         └──────────────────────────────────────────┘
                              │
                              ▼                    ⌐S7
         ┌──────────────────────────────────────────┐
         │ REMOVE INITIALIZATION BIAS WITH RESPECT TO mₜ │
         │                 AND cₜ                     │
         └──────────────────────────────────────────┘
                              │
                              ▼                    ⌐S8
         ┌──────────────────────────────────────────┐
         │  ADJUST LEARNING RATE ON BASIS OF mₜ AND cₜ │
         │    AFTER REMOVAL OF INITIALIZATION BIAS    │
         └──────────────────────────────────────────┘
                              │
                              ▼                    ⌐S9
         ┌──────────────────────────────────────────┐
         │       UPDATE MODEL PARAMETER θₜ            │
         └──────────────────────────────────────────┘
                              │
                              ▼                    ⌐S10
    NO    ◇─────────────────────────────────────────◇
  ◄───────  HAS PARAMETER θₜ CONVERGED?
          ◇─────────────────────────────────────────◇
                              │ YES
                              ▼
                          ( END )
```

$t = t+1$

CALCULATE FIRST-ORDER GRADIENT $g_t$

CALCULATE APPROXIMATE VALUE $m_t$ OF MOVING AVERAGE OF FIRST-ORDER GRADIENT $g_t$

CALCULATE MOVING AVERAGE $c_t$ OF VARIANCE OF FIRST-ORDER GRADIENT $g_t$

REMOVE INITIALIZATION BIAS WITH RESPECT TO $m_t$ AND $c_t$

ADJUST LEARNING RATE ON BASIS OF $m_t$ AND $c_t$ AFTER REMOVAL OF INITIALIZATION BIAS

UPDATE MODEL PARAMETER $\theta_t$

HAS PARAMETER $\theta_t$ CONVERGED?

# FIG.3

**Algorithm 1** Learning algorithm according to present embodiment. Empirical standard settings of hyperparameter are: $\alpha = 0.001$, $\beta_1 = 0.7$, $\beta_2 = 0.99$

**input** $\alpha, \beta_1 \in [0.5, 1), \beta_2 \in [0, 1), \theta_0$

1: $t \leftarrow 0, m_0 \leftarrow 0, \hat{m}_0 \leftarrow 0, c_0 \leftarrow 0, \hat{c}_0 \leftarrow 0$
2: **repeat**
3:     $t \leftarrow t + 1$
4:     $g_t \leftarrow \nabla f(\theta_{t-1}; x_{t-1})$
5:     $m_t = \beta_1 m_{t-1} + (1 - \beta_1)(g_t - m_{t-1})$
6:     $c_t = \beta_2 c_{t-1} + \beta_2(1 - \beta_2)(g_t - m_{t-1})^2$
7:     $\hat{m}_t = m_t/(1 - \beta_1^t)$
8:     $\hat{c}_t = c_t/(1 - \beta_2^t)$
9:     $\theta_t \leftarrow \theta_{t-1} - \alpha \hat{m}_t/(\sqrt{\hat{c}_t} + \epsilon)$
10: **until** $\theta_t$ converges

# FIG.4

```
START
```

↓

S11

INPUT LEARNING RATE $\alpha$ AND WEIGHT $\beta_1$

↓

S12

INITIALIZE EACH OF VARIABLES

↓

S13

$t = t+1$

↓

S14

CALCULATE FIRST-ORDER GRADIENT $g_t$

↓

S15

CALCULATE MOVING AVERAGE $m_t$ OF FIRST-ORDER GRADIENT $g_t$

↓

S16

CALCULATE MOVING AVERAGE $c_t$ OF VARIANCE OF FIRST-ORDER GRADIENT $g_t$

↓

S17

REMOVE INITIALIZATION BIAS WITH RESPECT TO $c_t$

↓

S18

ADJUST LEARNING RATE ON BASIS OF $c_t$ AFTER REMOVAL OF INITIALIZATION BIAS AND FIRST-ORDER GRADIENT $g_t$

↓

S19

UPDATE MODEL PARAMETER $\theta_t$

↓

S20

HAS PARAMETER $\theta_t$ CONVERGED? —NO (back to S13)

↓ YES

```
END
```

# FIG.5

**Algorithm 2** Learning algorithm according to present embodiment.

---

**input** $\alpha, \theta_0, \beta_1 \in [0, 1)$

1: $t \leftarrow 0, m_0 \leftarrow 0, c_0 \leftarrow 0, \hat{c}_0 \leftarrow 0$

2: **repeat**

3: $\quad t \leftarrow t + 1$

4: $\quad g_t \leftarrow \nabla f(\theta_{t-1}; x_{t-1})$

5: $\quad m_t = \beta_1 m_{t-1} + (1 - \beta_1) \, g_t$

6: $\quad c_t = \beta_1 c_{t-1} + \beta_1 (1 - \beta_1)(g_t - m_{t-1})^2$

7: $\quad \hat{c}_t = c_t / (1 - \beta_1^t)$

8: $\quad \theta_t \leftarrow \theta_{t-1} - \alpha \, g_t / (\sqrt{\hat{c}_t} + \epsilon)$

9: **until** $\theta_t$ converges

---

# FIG.6

EP 3 432 230 A1

## INTERNATIONAL SEARCH REPORT

| International application No. |
| --- |
| PCT/JP2017/015337 |

**A. CLASSIFICATION OF SUBJECT MATTER**
*G06N99/00(2010.01)i*

According to International Patent Classification (IPC) or to both national classification and IPC

**B. FIELDS SEARCHED**

Minimum documentation searched (classification system followed by classification symbols)
G06N99/00

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | KINGMA, P. Diederik, BA, Lei Jimmy, ADAM: A Method for Stochastic Optimization [online], 2014.12.22, [retrieval date 2017.6.30], Internet: <URL:https://arxiv.org/pdf/1412.6980v1.pdf>, chapters 1 to 3 | 1-7 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 June 2017 (30.06.17) | 11 July 2017 (11.07.17) |

| Name and mailing address of the ISA/ | Authorized officer |
| --- | --- |
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. DUCHI ; E. HAZAN ; Y. SINGER.** Adaptive Subgradient Methods for Online Learning and Stochastic Optimization. *The Journal of Machine Learning Research,* 2011, vol. 12, 2121-2159

- **M. D. ZEILER.** *ADADELTA: AN ADAPTIVE LEARNING RATE METHOD,* 2012
- **D. KINGMA ; J. BA.** *ADAM: A METHOD FOR STOCHASTIC OPTIMIZATION,* 2014